# EUROPÄISCHE PATENTSCHRIFT

(11) **EP 3 570 530 B1**
(45) Veröffentlichungstag und Bekanntmachung des Hinweises auf die Patenterteilung: **10.11.2021**
(21) Anmeldenummer: 19169156.7
(22) Anmeldetag: 15.04.2019
(51) Int. Cl.: H04N 1/401, H04N 1/405

(54) **KOMPENSATION VON DICHTESCHWANKUNGEN**
COMPENSATION FOR DENSITY FLUCTUATIONS
COMPENSATION DE FLUCTUATIONS DE DENSITÉ

(30) Priorität: 17.05.2018 DE 102018207728
(43) Veröffentlichungstag der Anmeldung: 20.11.2019
(73) Patentinhaber: Heidelberger Druckmaschinen AG, 69115 Heidelberg (DE)
(72) Erfinder: Stritzel, Bernd, 24340 Goosefeld (DE)

(56) Entgegenhaltungen:
- EP-A2- 1 435 728
- EP-A2- 1 814 302
- DE-T2- 69 525 017
- US-A1- 2013 176 600
- US-B1- 6 364 446

## Beschreibung

Die Erfindung betrifft ein Verfahren zur Kompensation positionsabhängiger Dichteschwankungen in einer Inkjet-Druckmaschine.

Die Erfindung liegt im technischen Gebiet des Inkjetdrucks.

Ein wesentliches Qualitätsmerkmal beim Inkjetdruck ist es eine eindeutige, klar definierte Abbildung des Bildinhaltes / Sujets zu erzielen. Dabei soll die Abbildung an allen Stellen innerhalb des druckbaren Formates zum gleichen Ergebnis führen, dies erfordert eine örtliche Homogenität des Druckes. Eine Schwierigkeit im Inkjetdruck besteht darin quer zur Druckrichtung (X-Track) diese geforderte Homogenität sicher zu stellen. Inkjet Druckköpfe zeigen im Allgemeinen gewisse Streuungen für das Jetten der einzelnen Düsen. Ursachen hierfür sind Streuungen in der Fertigung, in der Tintenversorgung der Nozzles, in den mechanischen Streuungen der Piezo Aktoren etc. Dies alles führt dazu dass bei identischer Beaufschlagung der Nozzles eine Inhomogenität der Dichte bzw. Färbung über den Druckkopf resultiert.

Dieses Problem wird mit Hilfe von Dichtekompensationsverfahren gelöst. Die Dichteungleichförmigkeit bei gleichförmiger Ansteuerung aller Nozzles wird mittels Testformen für eine gewisse Anzahl von Flächendeckungen aufgenommen. Anhand der Verläufe quer zur Druckrichtung werden Kompensationsprofile ermittelt und beim Druckprozess entsprechend vorgehalten, so dass letztendlich darüber eine homogene Abbildung erreicht wird.

Aus dem Stand der Technik ist zur Thematik der Dichtekompensation in Inkjet-Druckmaschinen die US-Patentanmeldung US 2012/0081444 A1 bekannt, welche ein Verfahren zur Kompensation von Dichteschwankungen offenbart, in welchem ein erstes Bild gedruckt wird. Dieses erste Bild wird von einem Anwender dann auf mögliche Dichteschwankungen untersucht. Die Dichteschwankungen werden festgestellt, in ihrer Größe und Ausdehnung spezifiziert und dann mittels einer Korrekturtabelle rechnergestützt kompensiert. Mit Hilfe dieser Korrekturtabelle wird dann ein zweites Bild erzeugt, welches gedruckt wird und ebenfalls auf noch weiterhin vorhandene Dichteschwankungen untersucht wird. Haben sich die entsprechenden Änderungen als wirksam herausgestellt, werden die dann als wirksam ermittelten Korrekturwerte in die Tabelle eingetragen und für den Fortdruck zur fortlaufenden Korrektur von lokalen Dichteschwankungen verwendet.

Für die Lösung der Dichteschwankungsproblematik sind im Stand der Technik allgemein zwei verschiedene Ansätze bekannt und werden bei vorhandenen Drucksystemen auch eingesetzt.

### 1. Kompensation auf den Grauwertbildern (continuous tone separations) der separierten Farbauszüge vor dem Rastern (Vorkompensation)

Verfahren: Mit Hilfe der Kompensationsprofile werden die Grauwerte in einer Separation in Abhängigkeit ihres Sollwertes, der Position im Bild quer zur Druckrichtung und des zugehörigen Kompensationswertes aus dem Profil modifiziert um im Druck den Sollwert zu erreichen. Da diese Informationen nur diskret z.B. nur für 10 Flächendeckungen etc. vorliegen werden Interpolationsverfahren eigesetzt um die geforderten Parameter abzubilden. Erst nach Modifikation der einzelnen Farbauszüge werden diese gerastert.

Vorteile: Die Abbildungseigenschaften des Rasters werden auf diese Weise beibehalten, insbesondere Graininess, Rauschen, Verläufe, etc. werden nicht negativ beeinträchtigt. Die für die Berechnung erforderliche Kenntnis der Flächendeckung ist über den Bildinhalt mit hoher Auflösung bekannt und braucht im Gegensatz zu Verfahren 2 nicht extra ermittelt werden.

Nachteile: Die Kompensation muss vor dem Rastern erfolgen, d.h. Änderungen am Kompensationsprofil erfordern einen erneuten Rastervorgang. Dieser ist relativ zeitaufwändig und nur bedingt onlinefähig. Eine Verschiebung des Druckbildes quer zur Druckrichtung und damit relativ zu den Druckeinheiten erfordert ebenfalls eine erneute Rasterung. Umgekehrt, nach der Rasterung sind Änderungen am Quer-Register, oder der Bogenlage in der Maschine bzw. der Bahnposition quer zur Druckrichtung eigentlich nicht mehr möglich, da sich die lokale Kompensationsstärken mit dem Bild relativ zu den Druckköpfen verschieben und so nicht mehr korrekt zugeordnet sind. Außerdem liegen die Farbwerte in der Regel nur in einer Auflösung von 8 Bit vor, was bei Anwendung einer Abbildung in einen Zielwertebereich von ebenfalls 8 Bit zu Quantisierungseffekten führt. Die Eingangswerte müssen daher durch geeignete Transformationen in einen höher aufgelösten Wertebereich gewandelt werden.

Ein Beispiel dieses Ansatzes wird in der US-Patentanmeldung US 2010/0321434 A1 offenbart. Diese zeigt ein Verfahren zur Kalibrierung einer Inkjet-Druckmaschine, welche Dichteschwankungen korrigiert. Das dortige Verfahren bezieht sich entsprechend auf eine Anpassung der vorliegenden Grauwerte, entspricht also dem bereits vorgestellten ersten Ansatz.

### 2. Kompensation auf dem bereits gerasterten Bild im Einzelfarbenauszug. (Online-Kompensation)

Verfahren: Die Dichtekompensation erfolgt bei diesem Verfahren auf Basis des gerasterten Farbauszuges. Für die zu kompensierende Stelle im Bild wird zunächst auf Basis des Rasters die vorliegende Flächendeckung ermittelt. Dies erfolgt nicht hochauflösend über die Bildinformation sondern wird mittels einer Matrix z.B. Fenster über 3 × 9 Pixel über das gerasterte Bild d.h. über die Mittelung einer Anzahl Rasterpunkten berechnet. Mit der Flächendeckung wird dann über Interpolation das zugehörige Kompensationsprofil bzw. der lokale Wert berechnet und die Pixelwerte, Verteilung und Stärke so angepasst dass der Bildsollwert erzeugt wird. Dieser Vorgang erfolgt online während des Druckprozesses. Die Anhebung oder Absenkung der Bildwerte erfolgt über das Setzen bzw. Weglassen von Dots oder das Anheben oder Absenken der Dot-Size über das gejettete Tropfenvolumen.

Vorteile: Dieser Kompensationsvorgang erfolgt online und ist sehr schnell, on the fly, möglich, er benötigt keine Unterbrechung des Druckvorgangs. Eine Verschiebung des Bildes relativ zu den Köpfen z.B. wenn das Register verändert wird ist problemlos möglich.

Nachteile: Die Ermittlung der lokalen Flächendeckung über ein gleitendes Fenster kann an den Rändern von Flächen- oder bei Linienelementen in Kombination mit dem Verfahren zu Artefakten führen. Durch den Eingriff in das gerasterte Bild über die Korrekturmaßnahmen wird das Raster verändert. Dies kann sich insbesondere bei stärkeren Korrekturen störend bemerkbar machen in Form von Strukturen, Graininess, Rauschen oder anderen Artefakten. Der Rasteralgorithmus ist i.a. optimiert auf Bildeigenschaften wie Homogenität, Auflösung, Glätte, Robustheit etc. Ein Eingriff in die Gestaltung des Rasters kann zu Qualitätseinbußen führen.

Ein weiteres Problem beim Inkjetdruck stellen sogenannte White Lines dar, d.h. durch Minderfunktion oder gar Ausfall einzelner Druckdüsen verursachte streifenförmige Artefakte in Druckrichtung. Für diese Fehlerbilder gibt es eigene Ansätze zur Kompensation. Diese kann neben der Kompensation von Dichteunterschieden ebenfalls on the fly im gerasterten Bild während des Druckvorganges erfolgen. Im Fall einer lokalen Häufung von zu kompensierenden White Lines ist eine Dichtekompensation hier besonders schwierig, oft verbleiben visuell sichtbare Inhomogenitäten. Die White Line Kompensation beeinflusst somit auch die Kompensation der Dichteschwankungen. Daher müssen aufgetretene White Lines, bzw. die Maßnahmen zu deren Kompensation, auch bei dem Verfahren zur Kompensation der lokal auftretenden Dichteschwankungen entsprechend mit berücksichtigt werden.

Als weiterer bekannter Stand der Technik offenbart das US Patent US 6364446 B1 ein Druckverfahren, das ein Bild hoher Qualität mit hoher Geschwindigkeit und niedrigen Kosten drucken kann und eine entsprechende Druckvorrichtung. In dieser Druckvorrichtung wird ein schattierungskorrigiertes Maskenmuster zum Multipass-Drucksteuerung unter Berücksichtigung der Eigenschaften jedes Druckelements eines Druckkopfs erzeugt. Die Größe des Maskenmusters in der Transportrichtung des Druckmediums wird auf ein ganzzahliges Vielfaches der Transportmenge des Druckmediums pro Abtastung des Druckkopfs eingestellt. Mit dem Maskenmuster maskierte Bilddaten werden dann auf den Druckkopf übertragen und gedruckt. Zudem offenbart die europäische Patentanmeldung EP 1 814 302 A2 einen Drucker mit einem Druckkopf, in dem Auslässe in einer Breitenrichtung senkrecht zu einer vorbestimmten Abtastrichtung angeordnet sind, wobei sich ein Druckpapier in der Abtastrichtung unter dem Kopf bewegt. In einer Basis-Dither-Matrix, die ein Array ist, in dem Elementwerte in einer Spaltenrichtung angeordnet sind, die der Abtastrichtung entspricht, und eine Zeilenrichtung, die der Breitenrichtung entspricht, werden Positionen in der Zeilenrichtung den Auslässen im Kopf zugeordnet. Die Elementwerte werden auf der Basis von Variationen der Druckdichten in Bezug auf die Breitenrichtung modifiziert, die durch Auswerfen aus den Auslässen verursacht werden. In dem Drucker wird das Drucken mit der modifizierten Dither-Matrix durchgeführt. Es ist daher möglich ein Bild mit hoher Geschwindigkeit zu drucken, wobei Ungleichmäßigkeiten, die durch Variation der Ausstoßmengen von Tröpfchen aus den Auslässen oder dergleichen verursacht werden, unterdrückt werden.

Die europäische Patentanmeldung EP 1435728 A2 wiederum offenbart ein Halbtonverfahren und -system unter Verwendung von Hybrid-AM / FM-Rasterung für tonale Glanzlicht- / Schattenbereiche. Dabei definiert eine Schwellenwertmaske zum Umwandeln eines Halbtonbildes in ein Halbtonbild Halbtonzellen, die Halbtonpunkte definieren, die mit zunehmendem Tonwert anwachsen.

Die europäische Patentschrift EP 0710006 B1 offenbart zudem eine Abbildungsvorrichtung zum Bilden eines Halbtonbildes, das mit mehreren Dichtestufen auf einem Abbildungsmedium dargestellt wird, und insbesondere eine Abbildungsvorrichtung, die ein Pseudo-Halbtonbild unter Verwendung von Zittermustern bzw. Rastermustern erzeugen kann.

Aufgabe der vorliegenden Erfindung ist somit, ein Verfahren zur Kompensation auftretender Dichteschwankungen in einer Inkjet-Druckmaschine zu offenbaren, welches effizienter als die bisher bekannten Verfahren ist und eine verbesserte Kompensation ermöglicht.

Gelöst wird diese Aufgabe durch ein Verfahren nach Anspruch 1. Das erfindungsgemäße Verfahren setzt auf der Tatsache auf, dass ohnehin eine Kalibrierung der Raster, welche für den Rasterungsprozess verwendet werden, notwendig ist. Anstatt dass wie bisher im Rahmen der Rasterung eine Lookup-Table verwendet wird, welche jedem Grauwert ein bestimmtes Rastermuster zuweist, wird dem Rasterungsprozess zusätzlich die Position einer jeden Druckdüse mit zugeführt. Damit lässt sich der Prozess der Kalibrierung, sprich der Zuweisung eines bestimmten Grauwertes zu einem bestimmten Rastermuster, abhängig von der Performance der jeweiligen Druckdüsen machen. Druckt eine Druckdüse z.B. etwas schwächer als erwartet, und ist somit im Rahmen der Dichtekompensation ein verstärkter Tinteneintrag notwendig, so kann für diese Druckdüse ein entsprechendes Raster mit entsprechend erhöhtem Tinteneintrag zugewiesen werden, um den Effekt der Dichteschwankung auszugleichen. Die ohnehin notwendige Kalibrierung wird also gleichzeitig verwendet, um die lokalen Dichteschwankungen mit auszugleichen. Dafür ist natürlich notwendig, dass die Dichteschwankungen der einzelnen Druckdüsen vor der Kalibrierung bekannt sind. Hierfür müssen sie entsprechend vorher ausgemessen werden. Da die Dichtekompensation jedoch fortlaufend durchgeführt werden muss, ist eine regelmäßige Bestimmung der aktuellen Werte für die Dichteschwankung der einzelnen Druckdüsen ohnehin regelmäßig notwendig. Die Einführung der Position jeder Druckdüse als mögliche Variable in die Lookup-Table führt zudem zu einer Aufspreizung der Lookup-Table in die Form einer Matrix. Es existiert also nicht mehr eine Lookup-Table, welche jedem Grauwert ein bestimmtes Raster zuweist, sondern es entstehen n Lookup-Tables, wobei n abhängig von der Anzahl der verwendeten Positionen jeder Druckdüse ist.

Ein Merkmal des erfindungsgemäßen Verfahrens ist dabei, dass die angepasste Zuordnung von Rastermustern zu Grauwerten für jede Position einer Druckdüse in der Look-Up-Table jeweils abhängig von der Dichteschwankung der jeweiligen Druckdüse ist. Durch diese angepasste Zuordnung wird sichergestellt, dass die lokal auftretende Dichteschwankung, welche jede Druckdüse aufweist, durch die Kalibrierung des Rasters bereits effizient kompensiert werden kann. Weist z.B. eine entsprechende Druckdüse einen zu geringen Tintenausstoß auf, welcher im Druckbild in einem zu geringen Farbwert resultiert, kann durch die angepasste Zuordnung des Rasters zum gewünschten Grauwert diese Dichteschwankung kompensiert werden. Da bei der Kalibrierung die Dichteschwankung, in diesem Fall der zu geringe resultierende Farbwert, bereits bekannt ist, wird für diese Druckdüse, sprich diese Position, für die entsprechenden Grauwerte ein höherer Rasterwert verwendet als dies normalerweise der Fall wäre. Damit wird die Unterfunktion der Druckdüse entsprechend kompensiert.

Eine weitere bevorzugte Weiterbildung des erfindungsgemäßen Verfahrens ist dabei, dass die Dichteschwankung der Druckdüsen der Inkjet-Druckmaschine durch ein Dichteprofil repräsentiert wird, welches zur Berechnung der Zuordnung von Rastermustern zu Grauwerten für jede Position einer Druckdüse in der Look-Up-Table durch den Rechner verwendet wird. Die Dichteschwankung der Druckdüsen muss für das erfindungsgemäße Verfahren natürlich bekannt sein. Am ehesten eignet sich zur Anwendung bei der Kalibrierung, sprich bei der Zuweisung von Rastermuster zu Grauwert im Rahmen der Kalibrierung, die Anwendung eines Dichteprofils. Das Dichteprofil wird üblicherweise durch Testmessungen im Vorlauf des erfindungsgemäßen Verfahrens erstellt. Es zeigt genau an, welche Druckdüse bzw. welcher Druckdüsenbereich mit welchem Tintenausstoß druckt und damit, welche resultierenden Farbwerte die jeweiligen Druckdüsen erzeugen. Das erstellte Dichteprofil beinhaltet damit die entsprechenden Dichteschwankungen der verwendeten Druckdüsen, bzw. der jeweils verwendeten Inkjet-Druckköpfe.

Eine weitere bevorzugte Weiterbildung des erfindungsgemäßen Verfahrens ist dabei, dass der Rechner für einen Bereich von benachbarten Druckdüsenpositionen jeweils den gleichen Satz Grauwerte mit zugeordneten, angepassten Rastermustern in der Look-Up-Table verwendet. Falls nicht für jede Position der Druckdüse eine eigene Lookup-Table verwendet werden muss, bzw. soll, können auch mehreren benachbarten DruckdüsenPositionen jeweils der gleiche Satz von Grauwerten mit entsprechend zugeordneten Rastermustern zugeordnet werden. Dieser Fall tritt beispielsweise ein, wenn die Dichteschwankungen eher träge geschehen, d.h. nicht von einer Druckdüse zur anderen eine hohe Dichteschwankung auftritt. Ein anderer Punkt besteht darin, den notwendigen Datenverwaltungsaufwand gering zu halten, indem nicht jeder Druckdüsenposition eine eigene Lookup-Table zugewiesen wird, sondern sich mehrere benachbarte Druckdüsen eine Lookup-Table mit entsprechendem Wertepaar Grauwert-zu-Rastermuster teilen. Damit wäre eine wesentlich effizientere Kalibrierung möglich, da der Datenverwaltungsaufwand entsprechend reduziert wird.

Eine weitere bevorzugte Weiterbildung des erfindungsgemäßen Verfahrens ist dabei, dass der gleiche Satz Grauwerte mit zugeordneten, angepassten Rastermustern in der Look-Up-Table Rastermuster, die an einen Mittelwert angepasst sind, verwendet, wobei der Mittelwert abhängig von den Dichteschwankungen der Druckdüsen des Bereichs ist. Weiterführend ist zudem der Ansatz möglich, dass sich Bereiche von benachbarten Druckdüsenpositionen nicht nur jeweils den gleichen Satz Grauwerte mit zugeordneten Rastermustern in der Lookup-Table teilen, sondern zudem die entsprechend zugeordneten Rastermuster an einen Mittelwert angepasst sind, welcher abhängig von den Dichteschwankungen der Druckdüsen des Bereichs ist. Dies bewirkt, dass die Bereiche von Druckdüsenpositionen, die sich einen Satz angepasster Rastermuster in der Lookup-Table teilen, nicht zu abrupt wechseln, wenn in den nächsten Bereich mit neuer Lookup-Table übergegangen wird. Die Verwendung von Mittelwerten gestaltet also den Übergang sanfter, womit Artefakte, die durch einen harten Übergang verursacht werden könnten, entsprechend reduziert werden.

Eine weitere bevorzugte Weiterbildung des erfindungsgemäßen Verfahrens ist dabei, dass der Rechner im Falle eines Mehrfarbendrucks das erfindungsgemäße Verfahren für jeden Farbauszug durchführt. Im Falle eines Mehrfarbendrucks wird für jeden Farbauszug eine eigene Matrix mit Lookup-Table mit Wertepaar-Grauwert und zugeordnetem Rastermuster sowie Positionen jeder für den Druck des Farbauszugs zuständigen Druckdüse, erstellt und verwendet.

Eine weitere bevorzugte Weiterbildung des erfindungsgemäßen Verfahrens ist dabei, dass in der Look-Up-Table jeweils 12-Bit-Rastermuster 8-Bit-Grauwerten zugeordnet werden, womit 4096 Rastermuster jeweils 256 Grauwerten gegenüber stehen. In der Lookup-Table geschieht also eine Quantisierung. Dabei wird jeweils von den 256 Grauwerten aus einem Pool von 12 Bit Rastermustern, d.h. 4096 verfügbaren Rastermustern, das entsprechende, für diesen Grauwert am besten geeignete Rastermuster zugeordnet. Theoretisch sind auch anders Bit-codierte Grauwerte möglich. Für das erfindungsgemäße Verfahren spielt die Anzahl der jeweiligen Grauwerte und Rastermuster nur eine untergeordnete Rolle. Entscheidend ist, dass jeweils für eine bestimmte Position oder einen Bereich von Positionen von Druckdüsen spezifische Rastermuster zugeordnet werden und damit die Kalibrierung und gleichzeitig die Kompensation der Dichteschwankungen durchgeführt werden. Falls z.B. keine 4096 Rastermuster verwendet werden, sondern eine andere Anzahl von Rastern, wäre dies ebenfalls problemlos möglich.

Eine weitere bevorzugte Weiterbildung des erfindungsgemäßen Verfahrens ist dabei, dass eine maximale Tintenbegrenzung umgesetzt wird, indem höheren Grauwerten durch den Rechner niedrigere Rastermuster zugeordnet werden, als dies einer äquidistanten Normalverteilung entsprechen würde. Der Inkjet-Druck kennt sogenannte maximale Tintenbegrenzungen, da, anders als beim Offsetdruck, nicht quasi unbegrenzt Farbauszüge übereinander gedruckt werden können. Zu viel Tinte auf einer bestimmten Stelle Drucksubstrat führt zu negativen Effekten, wie z.B. hinsichtlich des Trocknungsverhaltens oder des Zustandes des Drucksubstrates. Die maximale Tintenbegrenzung lässt sich im Rahmen der Kalibrierung sehr einfach durchführen. Anstatt dass höheren Grauwerten, wie z.B. dem höchsten Grauwert 255, entsprechend höhere Rastermuster mit sehr hohem Tintenaufkommen, z.B. dem Maximalwert 4095, zugeordnet werden, wird hier eingegriffen. Der Wert 4095 würde in einem derart hohen Tintenaufkommen resultieren, dass die maximale Tintenbegrenzung bereits überschritten wäre. Daher wird im Rahmen der Kalibrierung den höheren Grauwerten eben nicht ein solches höheres Rastermuster zugewiesen, wie es einem äquidistanten Abstand bei der Umsetzung von 8 Bit Grauwerten auf 12 Bit Rastermuster entsprechen würde, sondern es werden entsprechend niedrigere Rastermuster verwendet. Für den Grauwert 255 würde z.B. auch ein Rastermuster der Nummer 3172 völlig ausreichen. Wichtig ist dabei, dass die somit notwendige Verringerung des Abstandes zwischen den einzelnen Rastermustern, die dann entsprechend den hochlaufenden Grauwerten zugeordnet werden, so durchgeführt wird, dass die Farbtreue, sprich die zu erreichenden Zielfarbwerte des entsprechenden Druckauftrages, weiterhin gegeben ist.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: ein Beispiel des Aufbaus eines Inkjet-Druckmaschinen-Systems
- Figur 2:: ein Beispiel eines normalen Rasterprozesses
- Figur 3:: ein Beispiel eines Rasterprozesses mit Kalibrierung
- Figur 4:: ein Beispiel eines Rasterprozesses mit Kalibrierung und Dichtekompensation
- Figur 5:: den schematischen Ablauf des erfindungsgemäßen Verfahrens

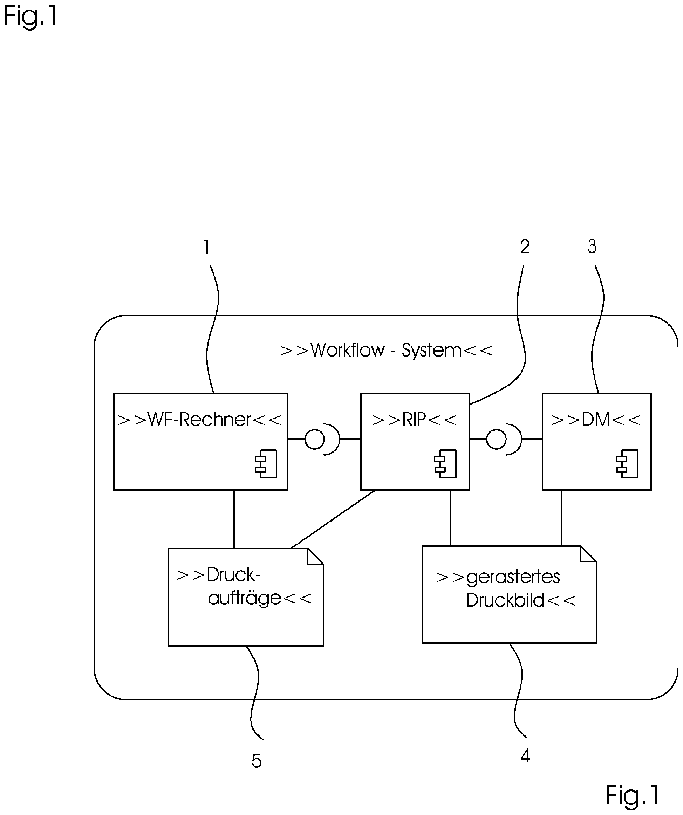

Das erfindungsgemäße Verfahren wird in einer Inkjet-Druckmaschine 3, welche sich in einem bestimmten Workflow-System befindet, eingesetzt. Ein solches Workflow-System ist beispielhaft in Figur 1 dargestellt. Das Workflow-System läuft auf einem oder mehreren Rechnern 1, über den die entsprechenden Druckaufträge 5 bearbeitet werden. Ein Druckauftrag 5, welcher auf einer Inkjet-Druckmaschine 3 gedruckt werden soll, wird dabei durch einen Raster-Image-Prozessor 2 gerastert und von dort werden die gerasterten Druckbilder 4 an die Inkjet-Druckmaschine 3 zum entsprechenden Fortdruck weitergeleitet. Der Raster-Image-Prozessor 2, welcher ebenfalls auf einem Rechner 1 betrieben wird, führt dabei die erfindungsgemäße Kalibrierung zwischen Grauwerten der einzelnen Farbauszüge des Vorstufenbildes und den entsprechenden Rastermustern 7, auf welchen das gerasterte Druckbild 4 entsteht, durch. Der erfindungsgemäße Ausgleich der auftretenden lokalen Dichteschwankungen 8 in der Inkjet-Druckmaschine 3 geschieht ebenfalls im Raster-Image-Prozessor 2.

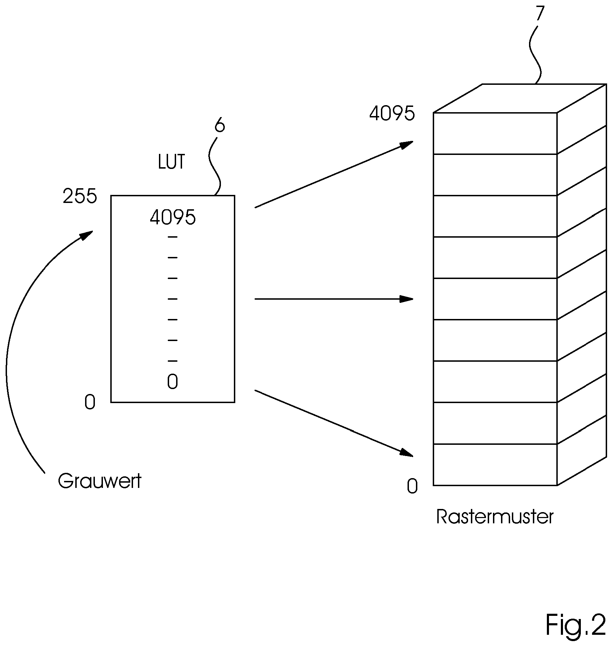

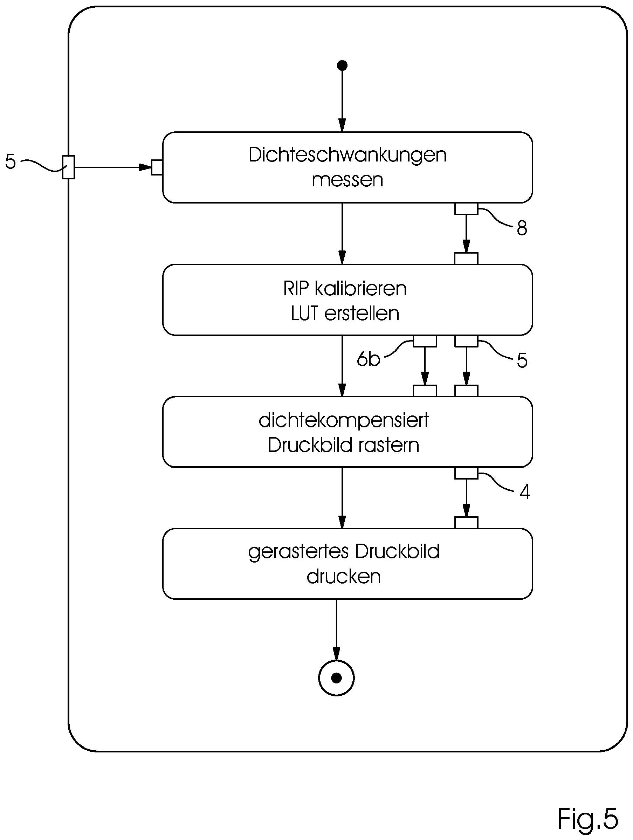

Das erfindungsgemäße Verfahren in seiner bevorzugten Ausführungsvariante ist schematisch noch einmal bezüglich seines Ablaufs in Figur 5 dargestellt. Zuerst werden die entsprechenden Dichteschwankungen 8 der jeweiligen Inkjet-Druckmaschine 3 ausgemessen. Dabei wird das entsprechende Dichteprofil für diese Inkjet-Druckmaschine 3 erstellt. Mit diesen Daten und den entsprechenden Vorstufendaten des Druckauftrages 5 wird dann die Kalibrierung der Rastermuster 7, in deren Rahmen auch die Kompensation der auftretenden Dichteschwankung 8 der Inkjet-Druckmaschine 3 durchgeführt wird, bearbeitet. Dies geschieht durch die Erstellung der entsprechenden Lookup-Table 6b, welche matrixartig nicht nur die Wertepaare zwischen Grauwert und entsprechend angepasstem Rastermuster 7 beinhaltet, sondern zusätzlich noch als weiteren Parameter, die Position der entsprechenden Druckdüsen der verwendeten Druckköpfe der Inkjet-Druckmaschine 3. Es wird also eine Matrix von Lookup-Tables 6b erstellt, wobei im Extremfall für jede Position einer Druckdüse eine eigene Lookup-Table 6b erstellt wird. In den Figuren 2 bis 4 wird der strukturelle Aufbau einer solchen Lookup-Table 6, 6a, 6b näher beschrieben.

Figur 2 zeigt dabei den Ablauf einer Rasterung, welche noch keine Kalibrierung aufweist. Gut zu erkennen ist, dass jedem Grauwert von 0 bis 255 ein bestimmtes Rastermuster 7 zugewiesen wird. Es existieren 4096 verschiedene Rastermuster 7, welche sich aus der Anzahl der Tintentropfengrößen, welche die Inkjet-Druckmaschine 3 zur Verfügung stellt, und den einzelnen Rasterpixeln, welche ein einzelnes Rastermuster 7 aufweist, ergeben. Eine Lookup-Table 6 im Raster-Image-Prozessor 2 weist dabei jedem, im noch nicht gerasterten Druckbild auftretenden Grauwert, ein spezifisches Rastermuster 7 zu. Wenn keine Kalibrierung vorgenommen wird, sind dabei die entsprechenden Schritte bei der Zuordnung äquidistant. D.h., es wird z.B. dem Grauwert 0 das Rastermuster 0 zugeordnet, da der Grauwert 0 einem Nichtvorhandensein der entsprechenden Farbe entspricht und damit entsprechend natürlich im zugeordneten Rastermuster 7 kein Pixel gesetzt sein darf. Der Grauwert 1 entspricht dann dem Rastermuster 16 usw. bis hin zum Grauwert 255, welcher dem Rastermuster 4095 entspricht. Die Distanz zwischen den einzelnen Schritten ist dabei von der Auflösung bzw. dem Auflösungsunterschied zwischen Vorstufenbild und Rasterbild 4 abhängig. Bei den vorliegenden Werten von einem 8 Bit Grauwert und einem 12 Bit Rastermuster beträgt sie entsprechend 16.

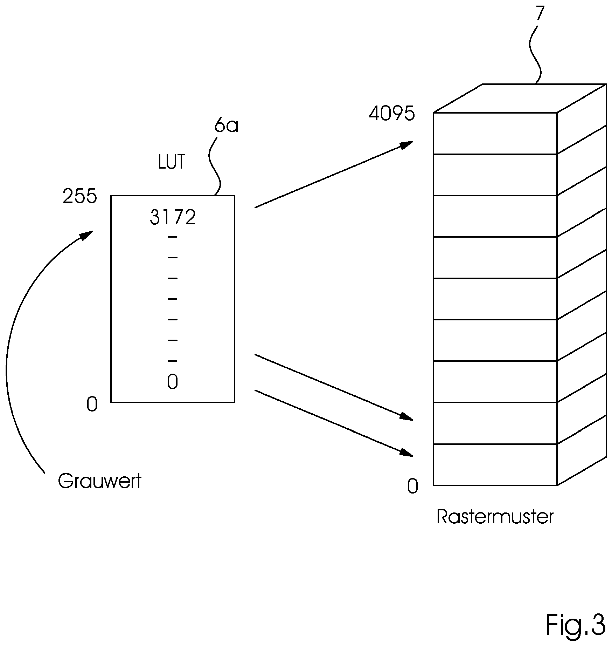

In Figur 3 wird die Rasterung beispielhaft mit einer Kalibrierung und eingeführter Tintenbegrenzung dargestellt. Das Verfahren entspricht dem ohne Kalibrierung, jedoch ist hier nicht mehr ein äquidistanter Abstand zwischen der einzelnen Zuordnung von Rastermuster 7 zu Grauwert vorhanden, sondern die Zuordnung ist entsprechend angepasst. So entspricht z.B. der maximale Grauwert 255 nicht mehr dem Rastermuster 4095, sondern dem Rastermuster 3172. Damit wird sichergestellt, dass der maximale Tintenauftrag im Druck nicht auf unzulässige Werte steigt. Im Rahmen der Kalibrierung kann der Abstand zwischen den einzelnen Rastermustern 7, welche den entsprechenden Grauwerten zugeordnet werden, von Grauwert zu Grauwert beliebig angepasst werden. Wie die Anpassung genau erfolgt, hängt vom Zustand der betreffenden Inkjet-Druckmaschine 3 bzw. dem zu erledigenden Druckauftrag 5 ab.

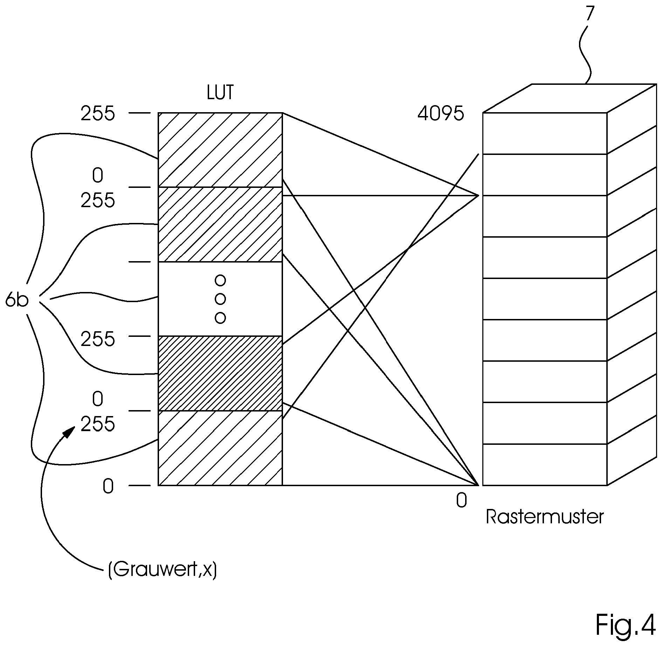

Figur 4 wiederum zeigt erfindungsgemäß wie die Kalibrierung zur Kompensation von Dichteschwankungen entsprechend angepasst wird. Hier existiert nicht mehr eine einzelne Lookup-Table 6, 6a, in welcher die Grauwerte 0 bis 255 entsprechend angepasst bestimmte Rastermuster 7 verwenden, sondern hier wird zusätzlich neben dem Grauwert die Position der jeweiligen Druckdüsen aus dem erstellten Dichteprofil, welches die Dichteschwankungen 8 der Inkjet-Druckmaschine 3 aufweist, berücksichtigt. Für die Düsenposition X wird beispielsweise der Satz von Grauwerten 0 bis 255 einem entsprechendem Satz von Rastermustern 0 bis 4095 zugeordnet. Für die nächste Druckdüse X + 1 wird ein weiterer Satz von Grauwerten 0 bis 255 den entsprechenden Rastermustern 7 zugeordnet. Für sämtliche, am Druckauftrag 5 beteiligten und somit zu dichteschwankungskompensierenden Druckdüsen, wird ein entsprechender Satz von Wertepaaren Grauwert zu Rastermuster 7 erstellt.

In einer gesonderten Ausführungsvariante ist die Erstellung der Lookup-Table 6b auch ohne die Daten des aktuellen Druckauftrags 5 möglich. Notwendig zur erfindungsgemäßen Dichteschwankungskompensation ist lediglich das erstellte Dichteprofil, welches die lokalen Dichteschwankungen 8 der Inkjet-Druckmaschine 3 beinhaltet.

Ist der Raster-Image-Prozessor 2 erfindungsgemäß kalibriert, kann mit den derart erstellten Lookup-Tables 6b, welche die Positionen der einzelnen Druckdüsen berücksichtigen, der jeweilige Druckauftrag 5 gerastert werden. Das daraus erstellte gerasterte Druckbild 4 enthält damit bereits die maschinenspezifische Kompensation der Dichteschwankungen 8 der betreffenden Inkjet-Druckmaschine 3. Damit kann das entsprechend gerasterte Druckbild 4 bereits dichtekompensiert gedruckt werden.

### Bezugszeichenliste

- 1: Rechner
- 2: Raster-Image-Prozessor (RIP)
- 3: Inkjet-Druckmaschine
- 4: gerastertes Druckbild
- 5: Druckauftrag
- 6: Lookup table (LuT)
- 6a: kalibrierte Lookup table (LuT)
- 6b: Matrix von positionsabhängigen, kalibrierten Lookup tables (LuT)
- 7: Rastermuster
- 8: Dichteschwankungen

## Patentansprüche

1. Verfahren zur Kompensation positionsabhängiger Dichteschwankungen (8) in einer Inkjet-Druckmaschine (3) durch einen Rechner (1), wobei im Rahmen der Kalibrierung eines Raster-Image-Prozessors (2) der Inkjet-Druckmaschine (3) mittels einer Look-Up-Table (6, 6a) jedem Grauwert eines zu rasternden Farbauszuges eines Druckbildes ein bestimmtes Rastermuster (7) zugeordnet wird, diese Rastermuster (7) vom Rechner (1) zur Rasterung des Druckbildes eingesetzt werden und das gerasterte Druckbild (4) auf der Inkjet-Druckmaschine (3) gedruckt wird,
wobei der Rechner (1) in die Look-Up-Table (6b) eine zusätzliche Variable für die Position jeder Druckdüse in den Druckköpfen der Inkjet-Druckmaschine (3) einträgt und für jede Position einer Druckdüse in der Look-Up-Table (6b) jeweils einen kompletten Satz Grauwerte mit zugeordneten, angepassten Rastermustern (7) einträgt, und
wobei die angepasste Zuordnung von Rastermustern (7) zu Grauwerten für jede Position einer Druckdüse in der Look-Up-Table (6b) jeweils abhängig von der Dichteschwankung (8) der jeweiligen Druckdüse ist.

2. Verfahren nach Anspruch 1,
**dadurch gekennzeichnet,**
**dass** die Dichteschwankung (8) der Druckdüsen der Inkjet-Druckmaschine (3) durch ein, insbesondere mittels Testmessungen erstelltes, Dichteprofil repräsentiert wird, welches zur Berechnung der Zuordnung von Rastermustern (7) zu Grauwerten für jede Position einer Druckdüse in der Look-Up-Table (6b) durch den Rechner (1) verwendet wird.

3. Verfahren nach Anspruch 1 oder 2,
**dadurch gekennzeichnet,**
**dass** der Rechner (1) für einen Bereich von benachbarten Druckdüsenpositionen jeweils den gleichen Satz Grauwerte mit zugeordneten, angepassten Rastermustern (7) in der Look-Up-Table (6b) verwendet.

4. Verfahren nach Anspruch 3,
**dadurch gekennzeichnet,**
**dass** der gleiche Satz Grauwerte mit zugeordneten, angepassten Rastermustern (7) in der Look-Up-Table (6b) Rastermuster (7), die an einen Mittelwert angepasst sind, verwendet, wobei der Mittelwert abhängig von den Dichteschwankungen (8) der Druckdüsen des Bereichs ist.

5. Verfahren nach einem der vorherigen Ansprüche,
**dadurch gekennzeichnet,**
**dass** der Rechner (1) im Falle eines Mehrfarbendrucks das erfindungsgemäße Verfahren für jeden Farbauszug durchführt.

6. Verfahren nach einem der vorherigen Ansprüche,
**dadurch gekennzeichnet,**
**dass** in der Look-Up-Table (6b) jeweils 12-Bit-Rastermuster (7) 8-Bit-Grauwerten zugeordnet werden, womit 4096 Rastermuster (7) jeweils 256 Grauwerten gegenüber stehen.

7. Verfahren nach Anspruch 6,
**dadurch gekennzeichnet,**
**dass** eine maximale Tintenbegrenzung umgesetzt wird, indem höheren Grauwerten durch den Rechner (1) niedrigere Rastermuster (7) zugeordnet werden, als dies einer äquidistanten Normalverteilung entsprechen würde.

## Claims

1. Method of compensating for position-dependent density fluctuations (8) in an inkjet printing press (3) by means of a computer (1), wherein in the course of a process of calibrating a Raster Image Processor (2) of the inkjet printing machine (3), a look-up table (6, 6a) is used to allocate a specific halftone pattern (7) to every grey value of a colour separation to be screened of a print image, wherein the computer (1) uses these halftone patterns (7) to screen the print image, wherein the screened print image (4) is printed by the inkjet printing machine (3), wherein the computer (1) enters an additional variable into the look-up table (6b) for the position of every printing nozzle in the printing heads of the inkjet printing machine (3) and, for every position of a printing nozzle in the look-up table (6b), enters a complete set of grey values with allocated adapted halftone patterns (7), and wherein the adapted allocation of halftone patterns (7) to grey values for every position of a printing nozzle in the look-up table (6b) is a function of the density fluctuation (8) of the respective printing nozzle.

2. Method according to claim 1,
**characterized in that**
the density fluctuation (8) of the printing nozzles of the inkjet printing machine (3) is represented by a density profile which has in particular been created by means of test measurements and which is used to calculate the allocation of halftone patterns (7) to grey values for every position of a printing nozzle in the look-up table (6b) by means of the computer.

3. Method according to claim 1 or 2,
**characterized in that**
for an area of neighbouring printing nozzle positions, the computer (1) uses the same respective set of grey values with allocated adapted halftone patterns (7) in the look-up table (6b).

4. Method according to claim 3,
**characterized in that**
the same set of grey values with allocated adapted halftone patterns (7) in the look-up table (6b) uses halftone patterns (7) which are adapted to an average value, which is a function of the density fluctuations (8) of the printing nozzles of the area.

5. Method recited in any one of the preceding claims,
**characterized in that**
for a multi-colour print, the computer (1) implements the method of the invention for every colour separation.

6. Method according to any one of the preceding claims,
**characterized in that**
the look-up table (6b) allocates 12-bit halftone patterns (7) to 8-bit grey values, which means that each of the 4096 halftone patterns (7) is faced with 256 grey values.

7. Method according to claim 6,
**characterized in that**
a maximum ink limit is implemented **in that** the halftone patterns (7) the computer (1) allocates to higher grey values are lower than they would be in an equidistant normal distribution.

## Revendications

1. Procédé pour la compensation de variations de densité (8) en fonction de la position dans une machine à imprimer à jet d'encre (3) par un ordinateur (1), pour lequel, dans le cadre du calibrage d'un processeur d'image tramée (2) de la machine à imprimer à jet d'encre (3), il est attribué au moyen d'un tableau de correspondance (6, 6a) un modèle de trame défini (7) à chaque niveau de gris d'une séparation chromatique à tramer d'une image imprimée, ces modèles de trame (7) étant utilisés par l'ordinateur (1) pour le tramage de l'image imprimée et l'image imprimée tramée (4) étant imprimée sur la machine à imprimer à jet d'encre (3),
pour lequel l'ordinateur (1) inscrit dans le tableau de correspondance (6b) une variable supplémentaire pour la position de chaque buse d'impression dans les têtes d'impression de la machine à imprimer à jet d'encre (3) et inscrit respectivement pour chaque position d'une buse d'impression, dans le tableau de correspondance (6b), un jeu complet de niveaux de gris avec des modèles de trame (7) adaptés,
et pour lequel l'attribution adaptée de modèles de trame (7) à des niveaux de gris pour chaque position d'une buse d'impression dans le tableau de correspondance (6b) dépend respectivement de la variation de densité (8) de la buse d'impression respective.

2. Procédé selon la revendication 1,
**caractérisé en ce**
**que** la variation de densité (8) des buses d'impression de la machine à imprimer à jet d'encre (3) est représentée par un profil de densité qui est notamment créé au moyen de mesures tests et qui est utilisé par l'ordinateur (1) pour le calcul de l'attribution de modèles de trame (7) à des niveaux de gris pour chaque position d'une buse d'impression dans le tableau de correspondance (6b).

3. Procédé selon la revendication 1 ou 2,
**caractérisé en ce**
**que** l'ordinateur (1) utilise le même jeu de niveaux de gris avec des modèles de trame attribués et adaptés (7) dans le tableau de correspondance (6b) pour une zone de positions de buses d'impression voisines.

4. Procédé selon la revendication 3,
**caractérisé en ce**
**que** le même jeu de niveaux de gris avec des modèles de trame attribués et adaptés (7) dans le tableau de correspondance (6b) utilise des modèles de trame (7) adaptés à une valeur moyenne, ladite valeur moyenne étant dépendante des variations de densité (8) des buses d'impression de la zone.

5. Procédé selon l'une des revendications précédentes,
**caractérisé en ce**
**que**, dans le cas d'une impression multicolore, l'ordinateur (1) met en œuvre le procédé de l'invention pour chaque séparation chromatique.

6. Procédé selon l'une des revendications précédentes,
**caractérisé en ce**
**que**, dans le tableau de correspondance (6b), des niveaux de gris de 8 bits sont respectivement attribués à des modèles de trame (7) de 12 bits, ce qui associe respectivement 256 niveaux de gris à 4096 modèles de trame (7).

7. Procédé selon la revendication 6,
**caractérisé en ce**
**qu'**une limitation d'encre maximale est mise en œuvre, du fait que des niveaux de gris plus élevés sont attribués par l'ordinateur (1) à des modèles de trame (7) plus faibles que dans le cas d'une répartition normale équidistante.
